# EUROPEAN PATENT SPECIFICATION

(11) **EP 3 087 696 B1**
(45) Date of publication and mention of the grant of the patent: **04.09.2019**
(21) Application number: 14875020.1
(22) Date of filing: 23.12.2014
(51) Int. Cl.: H04L 12/24, H04L 12/713

(54) **SYSTEM AND METHOD FOR MULTIPLE CONCURRENT VIRTUAL NETWORKS**
SYSTEM UND VERFAHREN FÜR MEHRERE GLEICHZEITIG LAUFENDE VIRTUELLE NETZWERKE
SYSTÈME ET PROCÉDÉ POUR UNE PLURALITÉ DE RÉSEAUX VIRTUELS CONCOMITTANTS

(30) Priority: 23.12.2013 US 201314139594
(43) Date of publication of application: 02.11.2016
(73) Proprietor: Netlinkz Technology PTY Ltd, Sydney, NSW 2000 (AU)
(72) Inventor: GARGETT, Charles Dunelm, Lathlain, WA 6100 (AU)
(74) Representative: EP&C
(86) International application number: PCT/AU2014/001161
(87) International publication number: WO 2015/095916

(56) References cited:
- WO-A1-2008/047930
- US-A1- 2010 290 473
- US-A1- 2011 216 775
- US-A1- 2013 044 629
- US-B1- 7 746 783

## Description

### CROSS-REFERENCE TO RELATED APPLICATIONS

The present application builds on the disclosure of PCT/AU2011/000247 and related family members.

### BACKGROUND OF THE INVENTION

### Field of the Invention

The present application relates generally to communication networks, and more particularly to a computer-implemented technique for converging connectivity for multiple virtual layered networks.

### Description of the Related Art

The use of multiple physical network connections using multiple physical network interfaces as peripherals in a single computer is well known in the art. An advantage of such a system is that a computer user can be concurrently and distinctly connected to multiple separate and discreet networks. This is particularly valuable in handling very large networks or in situations where high security is needed for each individual network but a computer user has clearance for access to more than one network at the same time. A requirement for this technique, replicable for each network connection and therefore restricting the number of connections that can be made, is the need for a specific hardware interface within a given node with an associated connection medium, for example an Ethernet cable, coupling the network interface to a specific network or network segment. To alleviate the restriction to the number of physical connections possible, the use of the 802.1q VLAN protocol, also known in the art, provides for the establishment of restricted broadcast domains on any given local area network that can redefine and restrict the boundaries of a logical network segment to ensure that targeted machines are able to communicate to the possible exclusion of all others. However this technique may be inefficient over wider area networks and may be considered insecure if transmissions are made over public networks without the assistance of secured tunnel, bridge or trunk connections between distinct VLANs which may be provided by additional, complex hardware and/or software modules.

The advantage of a virtual network connection is that it has made it possible for private networks to "piggy back" on or "tunnel" through other, often public networks and for the communications to be facilitated completely in software, thereby reducing costs and enabling rapid upgrade of network capability and deployment. The virtual network is accomplished by simulating with software the capabilities and functions normally delivered by physical network devices, however such virtual networks may restrict the corresponding capabilities of a physical local area network by preventing broadcasting over the virtual network connection thereby reducing the features provided by a broadcast domain.

Such virtual networks currently supply one point-to-point virtual network circuit at a time in any given client as an extension to exactly one physical network or as a bridge network between exactly two physical networks. In this context, it would be desirable to deliver the capabilities of a system concurrently connected to multiple distinct networks but doing so virtually as a software process. WO2008/047930 (MATSUSHITA) discloses coupling multiple concurrent virtual networks to multiple Virtual Network Interfaces VNIs on a many-to-many basis where a single VNI can represent only one virtual network. By contrast it would be advantageous if a system could be provided effecting coupling of multiple concurrent virtual networks to a single VNI in a one-to-many basis where that single VNI can represent multiple virtual networks simultaneously.

### SUMMARY OF THE INVENTION

The present invention is defined in the appended independent claims to which reference should be made. Advantageous features are set out in the appended dependent claims.

### BRIEF DESCRIPTION OF THE DRAWINGS

Fig. **1** shows a physical network connection system (prior art).
Fig. **2** shows a single instance virtual communications network (prior art).
Fig. **3** shows an embodiment of a system of multiple concurrent virtual networks in a single computer software process depicting a one-to-one VNI-to-virtual layered network relationship.
Fig. **4** illustrates an example methodology and processes for establishing multiple concurrent virtual networks using a Message Management Unit (MMU) and incorporated components where a one-to-one VNI-to-virtual layered network relationship is employed.
Fig. **5** illustrates an embodiment of a system of multiple concurrent virtual networks in a single computer software process depicting a one-to-many VNI-to-virtual layered network relationship.
Fig. **6** illustrates an example methodology and processes for establishing multiple concurrent virtual networks using a Message Management Unit and incorporated components where a one-to-many VNI-to-virtual layered network relationship is employed.
Fig. **7** demonstrates an example methodology where a one-to-many VNI-to-virtual layered network may be implemented and denotes the boundary of a given layered encryption zone (LENZ).
Fig. **8** illustrates further aspects of the methodology of Figs. **4** and **6****.**
Fig. **9** illustrates further aspects of the methodologies of Figs. **4** and **6** relating to transfer of messages between virtual layered networks.
Fig. **10** shows an example virtual apparatus for establishing multiple concurrent virtual networks, in accordance with the methodology of Figs. **4-7****.**

### DETAILED DESCRIPTION OF PREFERRED EMBODIMENTS

Various embodiments are now described with reference to the drawings, wherein like reference numerals are used to refer to like elements throughout. In the following description, for purposes of explanation, numerous specific details are set forth in order to provide a thorough understanding of one or more embodiments. It may be evident, however, that such embodiment(s) can be practiced without these specific details. In other instances, well-known structures and devices are shown in block diagram form in order to facilitate describing one or more embodiments. The word "exemplary" is used herein to mean "serving as an example, instance or illustration". Any embodiment described herein as "exemplary" is not necessarily to be construed as preferred or advantageous over other embodiments. The techniques described herein may be used for various communication networks, wired or wireless.

In accordance with one or more aspects of the embodiments described herein, there is provided features of a technique for converging connectivity for multiple virtual layered networks (e.g., by using encapsulation or tagging within a single computer software process using a single communications socket and at least one Virtual Network Interface (VNI).

The terms "network" and "system" are often used inter-changeably. The term "operating system" and "embedded system" may be used interchangeably herein and are considered to be one and the same. When referred to herein, an "operating system" is considered to be a collection of software and/or firmware that manages computer hardware resources and provides common services for supported software applications and the like.

A VNI refers to a software device often residing in the kernel of the operating system or embedded system that allows user-space software to be attached in order to read and/or write data packages to and/or from a network software stack at a pre-defined layer within the stack, e.g., layer 2, layer 3 or layer 4 (or possibly higher). Throughout this disclosure, when referring to operating with or on a VNI, data packages are deemed to be read/written at any one of these layers.

The terms "network communications port", "Network Communications Socket", "network port" and "network socket" are used interchangeably, mean one and the same and refer to or the use of a Network Communications Socket established via a capable layer 4 network protocol in the operating system network stack software.

The term "message" refers to a single package of data, including virtual layered network information tags, received from or written to a Network Communications Socket. The terms "message payload", "packet payload" and "payload" are used interchangeably, mean one and the same and refer to a single package of data, not including virtual layered network information tags, received from or written to a virtual network data stream at a predefined OSI model layer, for example but not limited to the VNI from which Ethernet frames or IP packets may be read/written.

In reference to messages, the term "tag" refers to the stream of bytes attached to the logical front of a message payload. In reference to messages, the term "tagged" refers to a message payload that has had a stream of bytes attached to it that are used to identify the virtual network to which the payload belongs. In reference to messages, the term "tagging" refers to the process of attaching a stream of bytes to a message payload for the purpose of identifying the message in respect to the virtual network to which it shall belong. Message tags may also include other data or information relating to the virtual network it belongs to.

The terms "converge" and "converging" may be used herein to mean the process of bringing together or combining multiple message streams for transmission on a single Network Communications Socket. The terms "diverge" and "diverging" may be used herein to mean the process of separating messages received on a single Network Communications Socket for writing individually to one or more data streams, for example but not limited to, VNI handles.

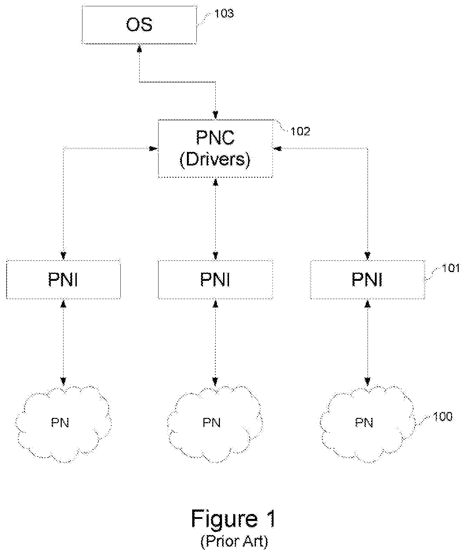

With reference to FIG. **1**, there is shown an overview of a physical network connection system on a single computer, known in the art. Each physical computer network (PN) **100** is connected to a physical communications or network interface (PNI) **101** that is in turn connected to a physical network controller (PNC) **102** that in turn delivers the communication data to an operating system (OS) **103** for processing and use by computer applications. The example in FIG. **1** also shows a multiple instance physical network connection that is known in the art. This configuration allows the computer user and applications to communicate and interact across multiple physical networks simultaneously.

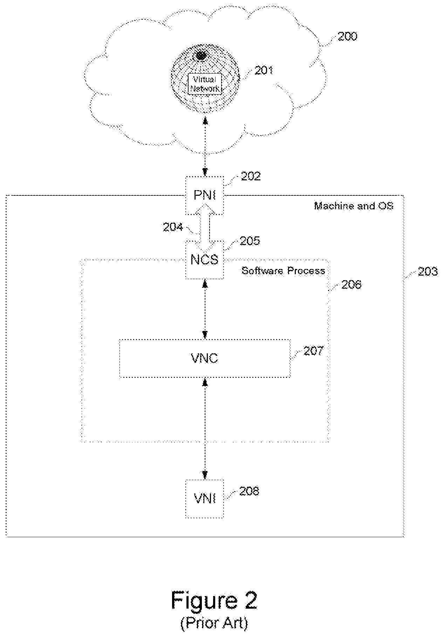

With reference to FIG. **2**, there is shown an example of a single instance virtual network, known in the art. A single virtual network (VN) **201**, residing in or across one or more physical networks **200**, is connected by a single Network Communications Socket (NCS) **205** coupled to a computer's physical network interface (PNI) **202** and a network software stack **204** of the computer's operating system **203**. The data packages originating from a VN arrive at the NCS handled by a single software process **206** comprising a virtual network controller (VNC) component **207** which reads an incoming VN data package from the NCS 205, processes it and writes the resulting payload to the VNI **208**. The reverse of this procedure is also true. Additionally, it should be obvious and understood by those skilled in the art that the system demonstrated in FIG. **2** could be replicated within the same system multiple times although separate software processes or kernel instances would be required to uphold each network connection through distinct network communication sockets handled by the operating system. This would facilitate a cumbersome and resource hungry means of virtually replicating the system outlined in FIG. **1**.

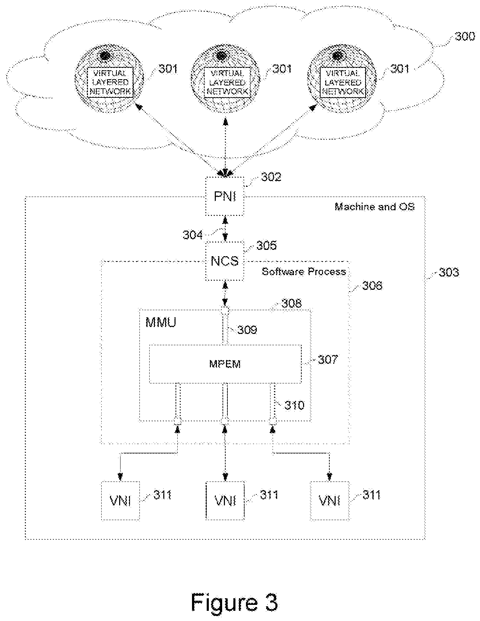

With reference to FIG. **3** there is provided an example embodiment of a system of multiple concurrent virtual networks. Similar to the system described in FIG. **2**, a virtual layered network **301A-B**, established in or across one or more physical networks **300**, is logically coupled to a single NCS **305** via a computer's PNI **302** and a network software stack **304** of the computer's operating system **303**. However, and to provide differentiation from the system described in FIG. **2**, the single NCS 305 is capable of receiving messages from the multiple virtual layered networks 301A-B so that the computer running the single process is able to be simultaneously connected to the multiple virtual layered networks 301A-B. The multiple virtual layered networks **301A-B**, residing in or across one or more physical networks **300**, are connected by the NCS **305** via the computer's PNI **302** and the network software stack **304** of the computer's operating system **303**. The messages originating from the virtual layered networks **301A-B** arrive at the NCS 305 handled by the single process **306** comprising a Message Management Unit (MMU) **308**. The MMU 308 further comprises a Message Payload Encapsulation Module (MPEM) **307**, an NCS data channel **309** and its respective NCS handle. Messages are received from the NCS 305 via the data channel **309** within the MMU 308 and transferred to the MPEM 307, wherein the messages are processed by utilizing tag removal and scrutiny to determine which of the plurality of VNI data channels **310A-B** the resulting message payload may be written for transmission beyond the MMU 308 to the corresponding VNI from among VNIs **311A-B**. The reverse of this procedure is also true.

The embodiment of FIG. 3 shows the inclusion of three simultaneous and separate network connections. However, in other embodiments, the system may support one or more connections. In related aspects, in another embodiment, the system may include a virtual routing module within the MMU, or a virtual routing unit between the MMU and the operating system, to allow groups of virtual networks to connect to other groups of virtual networks.

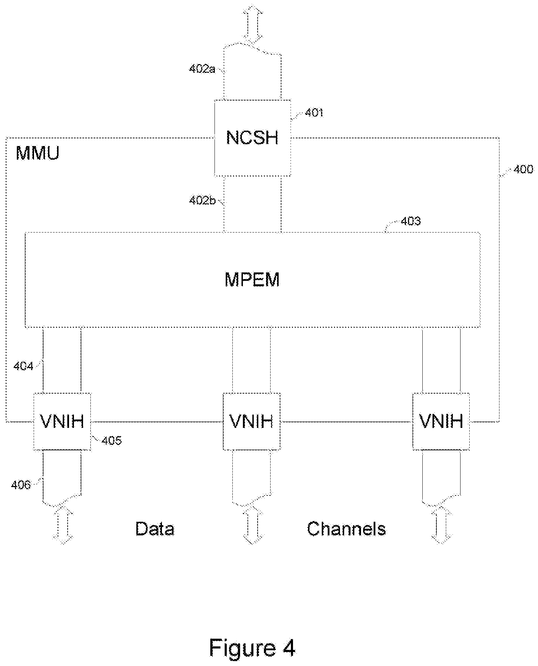

With reference to FIG. **4**, there is provided an example embodiment of a Message Management Unit (MMU) component **400** being a data processor within a single computer process as a possible embodiment of the system of multiple concurrent virtual networks. Traffic through this component may be bidirectional, flowing in one direction or the other and each is described individually herein.

With continued reference to FIG. **4**, message payloads arriving at one of a plurality of VNI handles (VNIH) **405A-B** via a corresponding data channel **406A-B** between the VNIH and a VNI (not shown in FIG. **4**) are made available for reading and transferred to a Message Payload Encapsulation Module (MPEM) **403** via an internal data channel **404**. Each payload may be read and transferred either sequentially from one VNIH or simultaneously from multiple VNIHs to the MPEM **403**. The payload is then tagged by the MPEM 403 making it clear which virtual network the message is intended for before being passed back to the MMU 400 along an internal data channel **402b** and subsequently written to a single Network Communications Socket Handle (NCSH) **401** via an external data channel **402a** along with a plurality of additional messages originating from the same or additional VNIHs within the MMU 400.

With continued reference to FIG. **4**, messages from a plurality of virtual layered networks (not shown in FIG. **4**) may arrive via a PNI (not shown in FIG. **4**) where they are transferred to the MMU 400 via an external data channel **402a** and become available for reading on a single Network Communications Socket Handle (NCSH) **401** within the MMU **400** and subsequently transferred via an internal data channel **402b** to the MPEM **403**. A message may be provided as part of a sequential stream of messages to the data processor within the MPEM for inspection wherein the tag is removed from the message and scrutinized to facilitate the identification of the message by the MMU 400 in relation to the VNIH **405** to which the resulting payload should be written wherein the VNIH will transmit the payload through a corresponding data channel **406** to the corresponding VNI (not shown in FIG. **4**).

It is noted, with reference to FIG. **3** and FIG. **4**, that the disclosed embodiments outlined thus far demonstrate a plurality of one-to-one relationships between the virtual layered networks **301A-B** and the respective VNI **311A-B** wherein the Message Management Unit (MMU) **308** and **400** and the embedded Message Payload Encapsulation Module (MPEM) **307** and **403** are able to easily maintain a correlation between the two components when message streams are converged or diverged within the MMU. While functional, the limitation of this embodiment relates to the number of VNIs a given operating system is able to handle concurrently thereby restricting the number of virtual layered networks a node may be connected to simultaneously.

In another example, there is not necessarily one-to-one relationships between the virtual layered networks and the VNIs. To demonstrate a resolution to this restriction, additional embodiments are now described with continued reference to the drawings wherein similar outcomes can be obtained through possible message and/or message payload header interrogation and/or manipulation providing a one-to-many relationship between a single VNI and a plurality of virtual layered networks.

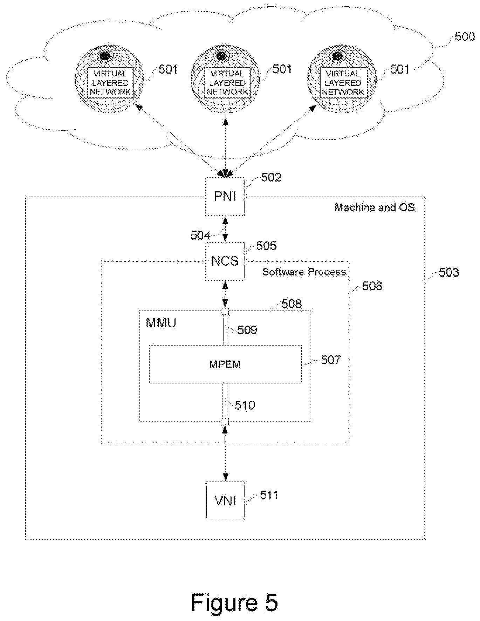

With reference to FIG. **5**, there is provided an example embodiment of a system of multiple concurrent virtual networks wherein a one-to-many relationship between a single VNI **510** and a plurality of virtual layered networks is demonstrated. Similar to the system described in FIG. **2**, but with reference to FIG. **5**, a virtual layered network **501**, wherein the network 500 comprises networks 501A-B that are established across one or more physical networks **500**. The network 501 may connect to a single Network Communications Socket (NCS) **505** via a computer's physical network interface (PNI) **502** and a network software stack **504** of the computer's operating system **503**. However, the single NCS is capable of receiving messages from multiple virtual layered networks so that the computer running the single process is able to be simultaneously connected to multiple virtual layered networks. The multiple virtual layered networks **501A-B**, residing in or across one or more physical networks **500**, are logically connected to the Network Communications Socket (NCS) **505** via the computer's physical network interface (PNI) **502** and the network software stack **504** of the computer's operating system **503**. The messages originating from the virtual layered networks **501** arrive at the NCS handled by the single process **506** comprising a Message Management Unit (MMU) **508** further comprising a Message Payload Encapsulation Module (MPEM) **507**, an NCS data channel **509** and its respective NCS handle. Messages are received from the NCS via the data channel **509** within the MMU and transferred to the MPEM wherein the messages are processed to remove the tag with the resulting tag information and payload provided back to the MMU, separately, for validation before the payload is written to the single VNI data channel and ultimately to the VNI. The reverse of this procedure is also true.

In related aspects, additional functionality of the MMU 508 and its integrated components, including but not limited to the MPEM, is provided herein to clarify the implementation of routines to facilitate the one-to-many relationship between the VNI and the plurality of virtual layered networks. For outbound messages, the MMU 508 uses the header information within the message payload, including but not limited to the Ethernet frame header, to determine the intended destination of the payload which is then used by the MPEM to tag the payload with appropriate headers, including delivery information, before writing the resulting message to the NCS 505 and where the underlying operating system or embedded system will deliver the message to the intended location.

In further related aspects, the MMU and its integrated components, including but not limited to the MPEM, is responsible for reading one or more incoming messages from the NCS that arrive from one ore more of the virtual layered networks via the underlying operating system. The message is provided to the MPEM where the message tag is removed and provided back to the MMU, along with the message payload, in order for the MMU to validate the message and determine the destination. In this embodiment, there is only one destination for the resulting payload and, once passing the message scrutiny routines of the MMU, the payload is written to the VNIH where it is taken up by the operating system for final processing.

It is necessary to understand that in order for the messages being sent and received by the MMU to be accepted by the respective operating system, the system must remain governed by the requirements of the native network protocols, including but not limited to the Internet Protocol, and their respective headers. One example is provided herein relating to the Internet Protocol and it should be understood by skilled artisans that this method is equally applicable to other suitable network protocols that are able to operate over a suitable traditional network.

With continued reference to FIG. **5**, in order to facilitate a one-to-many relationship between a VNI **511** and a plurality of distinct virtual layered networks **501A-B**, an appropriate Internet Protocol address mask must be applied to ensure that incoming messages from the plurality of virtual layered networks is acceptable. For example, while the remote nodes connected to individual virtual layered networks may be configured with distinct C class sub-network masks ensuring that no two virtual layered network address ranges overlap or clash, the Internet Protocol address assigned to the VNI is masked with an A class sub-network mask wherein the plurality of C class assigned virtual layered networks would all fall within the range of the network octet of the A class address range. For example, a skilled artisan implementing such a one-to-many embodiment might assign smaller C class sub networks to remote node in the virtual layered network while the A class network address 10.0.0.0 might be assigned to the local VNI instance to ensure that the local operating system knows to send related messages to the VNI wherein message payload scrutiny and/or header manipulation would assist with proper tagging of the payload and ensure correct delivery to the intended remote node in the respective virtual layered network.

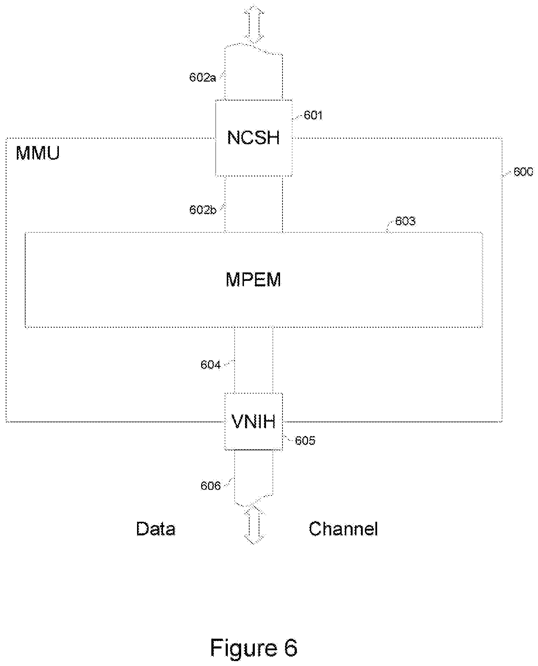

With reference to FIG. **6**, there is provided an example embodiment of a simplified Message Management Unit (MMU) component **600** being a data processor within a single computer process as a possible embodiment of the system of multiple concurrent virtual networks. Traffic through this component is bidirectional, flowing in one direction or the other and each is described individually herein.

With continued reference to FIG. **6** and in comparison to FIG. **4**, the process implemented by the Message Management Unit (MMU) component **600** is much the same as that of the same component demonstrated in FIG. **4**, however is somewhat simplified in that it has no need to handle multiple VNIs in order to couple the node to multiple concurrent layered virtual networks. Message payloads arrive on the single VNI Handle (VNIH) **605** via a corresponding data channel **606** between the VNIH and the VNI (not shown in FIG. **6**) and are made available for reading and transferred to the Message Payload Encapsulation Module (MPEM) **603** via an internal data channel **604**. In order to determine the destination virtual layered network to which the payload is intended, the MPEM inspects the payload header information and tags the payload before returning the resulting message to the MMU which inspects the tag information of the message to find the target node and, if known, the MMU will deliver the message via the internal data channel **602b** and the Network Communications Socket Handle (NCSH) **601** to the target node in the respective virtual layered network via external data channel **602a**. If the target node for the data packet is not known, then deeper inspection of the payload may be executed and if the target node is still unable to be determined, the payload may be treated as a broadcast data packet requiring transmission on all virtual layered networks in order to locate the target node or, alternatively, may be deemed by the MMU as undeliverable and subsequently dropped.

With continued reference to FIG. **6**, one or more incoming messages from a plurality of virtual layered networks (not shown in FIG. **6**) may arrive via a physical network interface (PNI) (not shown in FIG. **6**) and become available via an external data channel **602a** for reading on a single Network Communications Socket Handle (NCSH) **601** within the MMU 600. The message is transferred to the MPEM **603** via an internal data channel **602b** and made available for processing. All messages may be provided sequentially to the data processor within the MPEM for inspection wherein the tag is removed and from the message facilitating the separation of the tag from the message payload. The resulting tag information and message payload is then returned to the MMU for tag inspection and writing of the payload to the single VNIH, to which all virtual layered networks are indirectly coupled, wherein the VNIH will transmit the resulting payload to the VNI (not shown) via the appropriate data channel **606**. There is no need for the MMU **600** to determine a specific VNIH to write the payload to as there is only ever one VNIH and subsequently only one VNI to which payloads are delivered.

In view of exemplary systems shown and described hereinafter, the disclosed subject matter may include or utilize a layered encryption zone (LENZ) which can be considered to define a specific, encrypted communication domain between two or more network entities or nodes via a virtual layered network. In order to be bound to a LENZ, a node must maintain knowledge of the virtual layered network name and an encryption key that is used to encrypt and decrypt outgoing and incoming message payloads respectively. It is the combination of the network name and the encrypted communications that defines the logical boundaries of the communication domain between nodes. Any node that does not have knowledge of the virtual layered network name and the encryption key is considered to be outside of the LENZ and is not capable of communication on the virtual layered network.

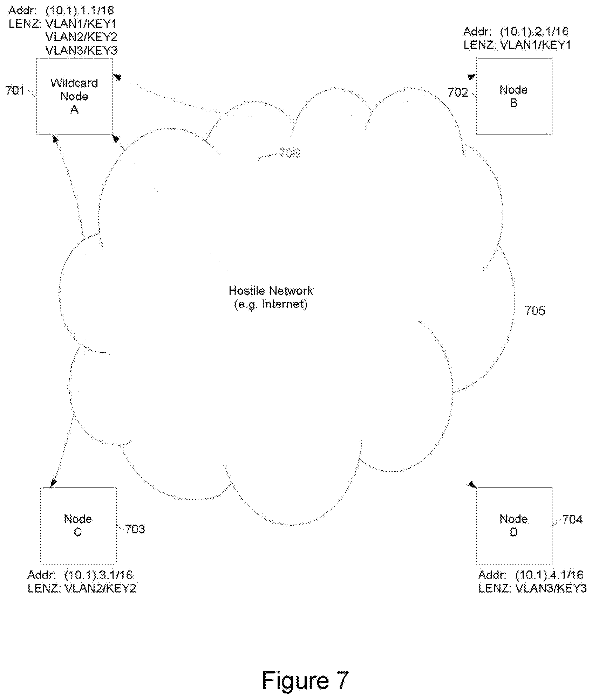

In another embodiment of a system of multiple concurrent virtual networks and the facility of the one-to-many relationship, a common Internet Protocol address range and sub-network mask can be applied to all nodes participating in the virtual layered network. As used herein, a wildcard node may refer to a node that is connected to multiple networks and is designated to read and handle packets from all networks while only being bound to a single VNI. Non-wildcard nodes require a 1-to-1 VNI-VN relationship. A wildcard node therefore could be connected directly to many different virtual networks with one network interface. In view of FIG. **5** and its related description, and with additional reference to FIG. 7 there is provided an exemplary system demonstrating the achievement of a one-to-many relationship between wildcard Node A **701** and three isolated and independent Nodes B **702**, C **703,** and D **704** wherein wildcard Node A **701** is assigned a single, B class sub-network IPv4 address and is also bound to 3 distinct layered encryption zones (LENZ) named VLAN1/KEY1, VLAN2/KEY2 and VLAN3/KEY3 which correspond to the individual and isolated nodes **702**, **703** and **704**. Messages from either Node B **702**, C **703** or D **704** arriving on the single Network Communications Socket (NCS) of the wildcard Node A **701** are decrypted using the encryption key that is selected based on information contained in the tags of the messages that arrive. Once these tags are removed and the separated message payload is decrypted, the resulting payload is written to the single VNI for processing by the operating system. The reverse of this procedure is also true.

As a specific, but not limiting, demonstration of how this is achieved, reference to FIG. 7 is continued with particular interest paid to the wildcard Node A **701** and Node D **704**. The two nodes communicate via the layered encryption zone (LENZ) VLAN3/KEY3 **706** which in turn uses the hostile network **705** (e.g. the Internet) as its physical transport medium over which the LENZ is layered, and where wildcard Node A **701** is assigned a virtual layered network IPv4 address of 10.1.1.1/16 and Node D **704** is assigned a virtual layered network IPv4 address of 10.1.4.1/16. These IPv4 address assignments stipulate that based on the common network segment of the addresses determined by the 16 bit network IPv4 address mask, traditional IPv4 packet delivery will be honored allowing the two nodes to locate each other and readily communicate assuming matching elements of the LENZ, for example a common virtual layered network name and matching encryption key. Nodes B **702** and C **703**, while on the same IP subnet, are configured with different LENZ binding information and therefore are unable to communicate on the VLAN3/KEY3 LENZ communications domain.

In view of exemplary systems shown and described herein, methodologies that may be implemented in accordance with the disclosed subject matter, will be better appreciated with reference to various flow charts. While, for purposes of simplicity of explanation, methodologies are shown and described as a series of acts/blocks, it is to be understood and appreciated that the claimed subject matter is not limited by the number or order of blocks, as some blocks may occur in different orders and/or at substantially the same time with other blocks from what is depicted and described herein. Moreover, not all illustrated blocks may be required to implement methodologies described herein. It is to be appreciated that functionality associated with blocks may be implemented by software, hardware, a combination thereof or any other suitable means (e.g., device, system, process, or component). Additionally, it should be further appreciated that methodologies disclosed throughout this specification are capable of being stored on an article of manufacture to facilitate transporting and transferring such methodologies to various devices. Those skilled in the art will understand and appreciate that a methodology could alternatively be represented as a series of interrelated states or events, such as in a state diagram.

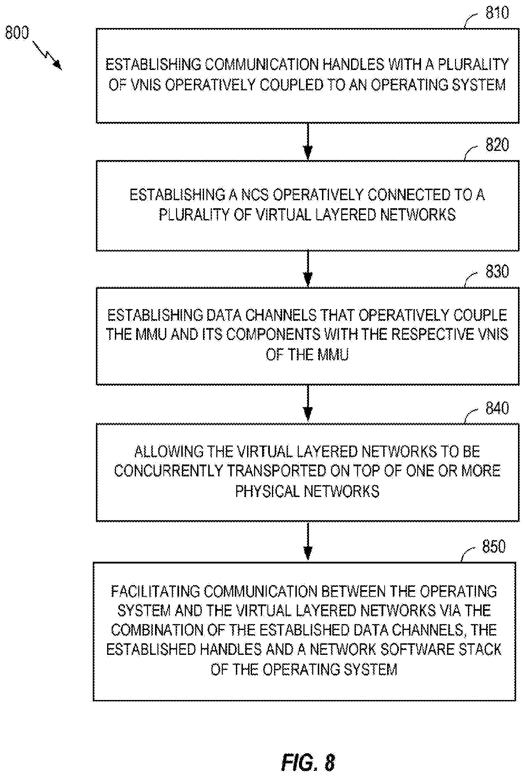

In accordance with one or more aspects of the subject of this disclosure, there are provided methods for establishing and using multiple concurrent virtual networks. With reference to FIG. **8**, illustrated is a methodology **800** that may be performed by a MMU or the like. The method **800** may involve, at **810**, establishing communication handles with a plurality of VNIs operatively coupled to an operating system. The method **800** may involve, at **820**, establishing a NCS operatively connected to a plurality of virtual layered networks. The method **800** may involve, at **830**, establishing data channels that operatively couple the MMU and its components with the respective VNIs of the MMU. The method **800** may involve, at 8**4**0, allowing the virtual layered networks to be concurrently transported on top of one or more physical networks. The method **800** may involve, at **850**, facilitating communication between the operating system and the virtual layered networks via the combination of the established data channels, the established handles and a network software stack of the operating system.

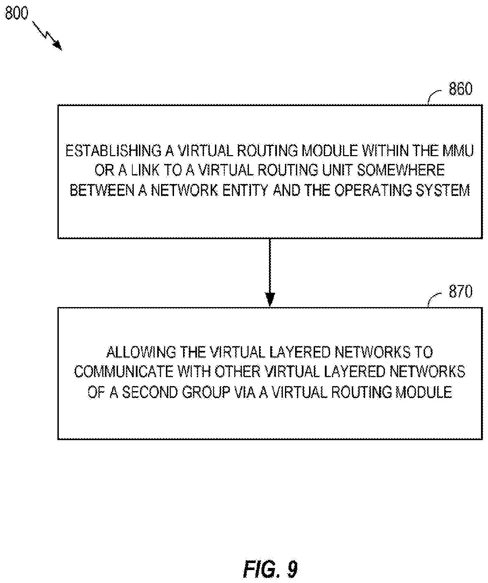

With reference to FIG. **9**, there are shown further operations or aspects of method **800** that are optional and may be performed by a MMU or the like. It is noted that the blocks shown in FIG. **9** are not required to perform the method **800**. If the method **800** includes at least one block of FIG. **9**, then the method **800** may terminate after the at least one block, without necessarily having to include any subsequent downstream blocks that may be illustrated. It is further noted that numbers of the blocks do not imply a particular order in which the blocks may be performed according to the method **400**.

With continued reference to FIG. **9**, the physical network may include the Internet, at least one wide area network (WAN), and/or at least one local area network (LAN). In related aspects, at least one of the virtual layered networks may include a virtual network that is tunneled through or layered over the physical network. In the alternative, or in addition, at least one of the virtual layered networks may comprise a virtual local area network (VLAN). In further related aspects, establishing the single Network Communications Socket (NCS) may involve, at **860**, establishing a virtual routing module within the MMU or a link to a virtual routing unit somewhere between a network entity and the operating system. The method **800** may further involve, at **870**, allowing the virtual layered networks to communicate with other virtual layered networks of a second group via a virtual routing module.

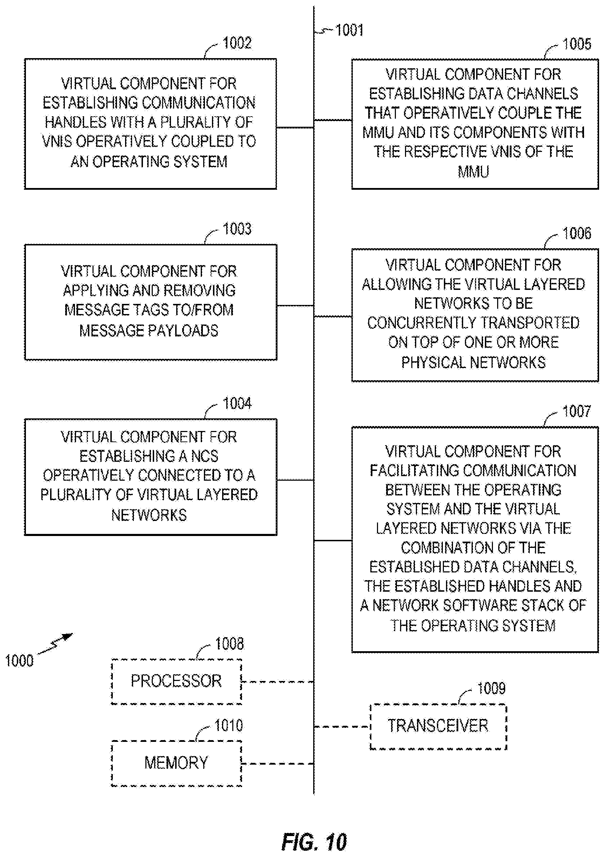

In accordance with one or more aspects of the embodiments described herein, there are provided devices and apparatuses for establishing and using multiple concurrent virtual networks, as described above with reference to FIG. **8**. With reference to Fig. **10**, there is provided an exemplary apparatus **1000** that may be configured as a device, or as a processor for use within the device. The apparatus **1000** may include functional blocks that can represent functions implemented by a processor, software, or combination thereof (e.g., firmware).

For example, the apparatus **1000** of FIG. **10** may comprise a virtual electrical component or module **1002** for establishing communication handles with a plurality of VNIs operatively coupled to an operating system. The apparatus **1000** may comprise a virtual component **1003** for applying and removing message tags to/from message payloads. The apparatus **1000** may comprise a virtual component **1004** for establishing a NCS operatively connected to a plurality of virtual layered networks. The apparatus **1000** may comprise a virtual component **1005** for establishing data channels that operatively couple the MMU and its components with the respective VNIs of the MMU. The apparatus **1000** may comprise a virtual component **1006** for allowing the virtual layered networks to be concurrently transported on top of one or more physical networks. The apparatus **1000** may comprise a virtual component **1007** for facilitating communication between the operating system and the virtual layered networks via the combination of the established data channels, the established handles and a network software stack of the operating system.

In related aspects, the apparatus **1000** may optionally include a processor component 1008 having at least one processor. The processor **1008**, in such case, may be in operative communication with the virtual components **1002-1007** via a bus **1001** or similar communication coupling. The processor **1008** may effect initiation and scheduling of the processes or functions performed by virtual components **1002-1007.**

In further related aspects, the apparatus **1000** may include a transceiver component **1009**. A stand alone receiver and/or stand alone transmitter may be used in lieu of or in conjunction with the transceiver **1009**. The apparatus **1000** may optionally include a component for storing information, such as, for example, a memory device/component **1010**. The computer-readable medium or the memory component **1010** may be operatively coupled to the virtual components of the apparatus **1000** via a bus **1001** or the like. The memory component **1010** may be adapted to store computer-readable instructions and data for effecting the processes and behavior of the virtual components **1002-1007.** While shown as being external to the processor **1008**, the transceiver **1009**, and the memory **1010**, it is to be understood that one or more of the virtual components **1002-1007** can exist within the processor 1008, the transceiver **1009**, and/or the memory **1010**.

Those of skill in the art would understand that information and signals may be represented using any of a variety of different technologies and techniques. For example, data, instructions, commands, information, signals, bits, symbols, and chips that may be referenced throughout the above description may be represented by voltages, currents, electromagnetic waves, magnetic fields or particles, optical fields or particles, or any combination thereof.

Those of skill in the art would further appreciate that the various illustrative logical blocks, modules, circuits, and algorithm steps described in connection with the disclosure herein may be implemented as electronic hardware, computer software, or combination of both. To clearly illustrate this interchangeability of hardware and software, various illustrative components, blocks, modules, circuits, and steps have been described above generally in terms of their functionality. Whether such functionality is implemented as hardware or software depends upon the particular application and design constraints imposed on the overall system. Skilled artisans may implement the described functionality in varying ways for each particular application, but such implementation decisions should not be interpreted as causing a departure from the scope of the present disclosure.

The various illustrative logical blocks, modules, and circuits described in connection with the disclosure herein may be implemented or performed with a general-purpose processor, a digital signal processor (DSP), an application specific integrated circuit (ASIC), a field programmable gate array (FPGA) or other programmable logic device, discrete gate or transistor logic, discrete hardware components, or any combination thereof designed to perform the functions described herein. A general-purpose processor may be a microprocessor, but in the alternative, the processor may be any conventional processor, controller, microcontroller, or state machine. A processor may also be implemented as a combination of computing devices, e.g., a combination of a DSP and a microprocessor, a plurality of microprocessors, one or more microprocessors in conjunction with a DSP core, or any other such configuration.

The steps of a method or algorithm described in connection with the disclosure herein may be embodied directly in hardware, in a software module executed by a processor, or in combination of the two. A software module may reside in RAM memory, flash memory, ROM memory, EPROM memory, EEPROM memory, registers, hard disk, a removable disk, a CD-ROM, or any other form of storage medium known in the art. An exemplary storage medium is coupled to the processor such that the processor can read information from, and write information to, the storage medium. In the alternative, the processor and the storage medium may reside in an ASIC. The ASIC may reside in a user terminal. In the alternative, the processor and storage medium may reside as discrete components in a user terminal.

In one or more exemplary designs, the functions described may be implemented in hardware, software, firmware, or any combination thereof. If implemented in software, the functions may be stored on or transmitted over as one or more instructions or code on a computer-readable medium. Computer-readable media includes both computer storage media and communication media including any medium that facilitates transfer of a computer program from one place to another. A storage media may be any available media that can be accessed by a general-purpose or special-purpose computer. By way of example, and not limitation, such computer-readable media can comprise RAM, ROM, EEPROM, CD-ROM or other optical disk storage, magnetic disk storage or other magnetic storage devices, or any other medium that can be used to carry or store desired program code means in the form of instructions or data structures and that can be accessed by a general-purpose or special-purpose processor. Also, any connection is properly termed a computer-readable medium. For example, if the software is transmitted from a website, server, or other remote source using a coaxial cable, fiber optic cable, twisted pair, DSL, or the non-transitory wireless technologies, then the coaxial cable, fiber optic cable, twisted pair, DSL, or the non-transitory wireless technologies are included in the definition of medium. Disk and disc, as used herein, includes compact disc (CD), laser disc, optical disc, digital versatile disc (DVD), floppy disk and Blu-ray disc where disks usually reproduce data magnetically, while discs reproduce data optically with lasers. Combinations of the above should also be included within the scope of computer-readable medium.

Besides those already mentioned above, many modifications and variations of the above embodiments may be made without departing from the scope of the invention as defined by the appended claims.

## Claims

1. A software-implemented method operable by a Message Management Unit, MMU, (308) in a network system, the method comprising:
establishing a communication handle with a single Virtual Network Interface, VNI, (208) resident as a kernel resource within an operating system (303);
establishing a single Network Communications Socket, NCS, (305) operatively coupled to a plurality of virtual layered networks via a Physical Network Interface, PNI, (101) and a network software stack of the operating system (303);
establishing data channels that operatively couple the MMU (308) with the NCS (305) and VNI (208) via respective data channel handles, namely Network Communications Socket Handle, NCSH, (401) and Virtual Network Interface Handle, VNIH (405); and
processing messages by a Message Payload Encapsulation Module, MPEM, (307), wherein the MPEM (307) is configured to:
read one or more messages received from the NCS (305) or the VNI (208),
associate a tag to each of the one or more messages by either separation or creation of tag information to the payload of the one or more messages; and
return the resulting payload and tag information to the MMU (308) for tag inspection and writing the payload to the designated destination via the NCSH (401) or the VNIH (405).

2. The method of claim 1, wherein:
one or more virtual layered networks may be concurrently transported on top of one or more physical networks; and
communication is established between the operating system (303) and the virtual layered networks via the established channels, handles and the network software stack and resources of the operating system (303).

3. The method of Claim 1, wherein at least one of the virtual layered networks represents a virtual local area network, VLAN.

4. The method of Claim 3, wherein at least one of the VLANs further comprises a layered encryption zone, LENZ.

5. The method of claim 1, wherein the MMU (308) is further configured to transmit messages between one or more virtual layered networks belonging to a first group with one or more virtual layered networks belonging to a second group.

6. The method of Claim 1, wherein the physical network comprises at least one wide area network, WAN.

7. The method of Claim 1, wherein the physical network comprises at least one local area network, LAN.

8. A system of multiple concurrent virtual networks (301), implemented as a single software process, the system comprising:
a Message Management Unit, MMU, (308) that is configured to: establish a communication handle with a single Virtual Network Interface, VNI, (208) resident as a kernel resource within an operating system (303), establish a single Network Communications Socket, NCS, (305) operatively coupled to a plurality of virtual layered networks via a Physical Network Interface, PNI, (101) and a network software stack of the operating system (303);
establish at least two data channels that operatively couple the MMU (308) with the NCS (305) and VNI (208) via respective data channel handles, namely Network Communications Socket Handle, NCSH (401) and Virtual Network Interface Handle, VNIH (405); and
the system further comprising a Message Payload Encapsulation Module, MPEM, (307), that is is configured to:
read one or more messages received from the NCS (305) or the VNI (208);
associate a tag to each of the one or more messages by either separation or creation of tag information to the payload of the one or more messages; and
return the resulting payload and tag information to the MMU (308) for tag inspection and writing the payload to the designated destination via the NCSH (401) or the VNIH (405).

9. The system of claim 8, wherein the MMU (308) is further configured to:
concurrently transport one or more virtual layered networks on top of one or more physical networks; and
establish communication between the operating system (303) and the virtual layered networks via the established channels, handles and the network software stack and resources of the operating system (303).

10. The system of Claim 8, wherein at least one of the virtual layered networks represents a virtual local area network, VLAN.

11. The system of Claim 10, wherein at least one of the VLANs further comprises a layered encryption zone, LENZ.

12. The system of claim 8, wherein the MMU (308) is further configured to transmit messages between one or more virtual layered networks belonging to a first group with one or more virtual layered networks belonging to a second group.

13. The system of Claim 8, wherein the physical network comprises at least one wide area network, WAN.

14. The system of Claim 8, wherein the physical network comprises at least one local area network, LAN.

15. A computer program product comprising instructions which, when the program is executed by a computer, cause the computer to carry out all the steps of the method according to claim 1.

## Patentansprüche

1. Software-implementiertes Verfahren, welches von einer Message Management Unit, MMU, (308) in einem Netzwerksystem durchführbar ist, wobei das Verfahren umfasst:
Einrichten eines Kommunikations-Handle mit einem einzelnen Virtual Network Interface, VNI, (208), welches als eine Kernel-Resource innerhalb eines Betriebssystems (303) angesiedelt ist;
Einrichten eines einzelnen Network Communications Socket, NCS, (305), welcher funktionsfähig mit mehreren virtuellen geschichteten Netzwerken über ein Physical Network Interface, PNI, (101) und einen Netzwerk-Software-Stack des Betriebssystems (303) gekoppelt ist;
Einrichten von Datenkanälen, welche die MMU (308) mit dem NCS (305) und dem VNI (208) über entsprechende Datenkanal-Handles, insbesondere einem Network Communications Socket Handle, NCSH, (401) und einem Virtual Network Interface Handle, VNIH (405) funktionsfähig koppeln; und
Verarbeiten von Nachrichten mittels eines Message Payload Encapsulation Module, MPEM, (307), wobei das MPEM (307) ausgestaltet ist,
eine oder mehrere Nachrichten, welche von dem NCS (305) oder dem VNI (208) empfangen wurden, zu lesen,
jeder der einen oder mehreren Nachrichten ein Kennzeichen durch entweder Trennen oder Erzeugen einer Kennzeicheninformation von der bzw. für die Nutzlast von der einen oder mehreren Nachrichten zuzuordnen; und
die resultierende Nutzlast und Kennzeicheninformation zu der MMU (308) für eine Kennzeichenüberprüfung und ein Schreiben der Nutzlast auf das bezeichnete Ziel über den NCSH (401) oder den VNIH (405) zurückzugeben.

2. Verfahren nach Anspruch 1, wobei:
ein oder mehrere virtuelle geschichtete Netzwerke gleichzeitig auf einem oder mehreren physikalischen Netzwerken transportiert werden können; und
eine Kommunikation zwischen dem Betriebssystem (303) und den virtuellen geschichteten Netzwerken über die eingerichteten Kanäle, Handles und den Netzwerk-Software-Stack und Ressourcen des Betriebssystems (303) eingerichtet wird.

3. Verfahren nach Anspruch 1, wobei zumindest eines der virtuellen geschichteten Netzwerke ein Virtual Local Area Network, VLAN, darstellt.

4. Verfahren nach Anspruch 3, wobei mindestens eines der VLANs ferner eine Layered Encryption Zone, LENZ, umfasst.

5. Verfahren nach Anspruch 1, wobei die MMU (308) ferner ausgestaltet ist, Nachrichten zwischen einem oder mehreren virtuellen geschichteten Netzwerken, welche zu einer ersten Gruppe gehören, und einem oder mehreren virtuellen geschichteten Netzwerken, welche zu einer zweiten Gruppe gehören, zu übertragen.

6. Verfahren nach Anspruch 1, wobei das physikalische Netzwerk mindestens ein Wide Area Network, WAN, umfasst.

7. Verfahren nach Anspruch 1, wobei das physikalische Netzwerk mindestens ein Local Area Network, LAN, umfasst.

8. System von mehreren gleichzeitigen virtuellen Netzwerken (301), welches als ein einzelner Softwareprozess implementiert ist, wobei das System umfasst:
eine Message Management Unit, MMU, (308), welche ausgestaltet ist,
einen Kommunikations-Handle mit einem einzelnen Virtual Network Interface, VNI, (208), welches als eine Kernel-Resource innerhalb eines Betriebssystems (303) angesiedelt ist, einzurichten,
einen einzelnen Network Communications Socket, NCS, (305) einzurichten, welcher funktionsfähig mit mehreren virtuellen geschichteten Netzwerken über ein Physical Network Interface, PNI, (101) und einen Netzwerk-Software-Stack des Betriebssystems (303) gekoppelt ist;
mindestens zwei Datenkanäle einzurichten, welche die MMU (308) mit der NCS (305) und der VNI (208) über entsprechende Datenkanal-Handles, insbesondere einem Network Communications Socket Handle, NCSH (401) und einem Virtual Network Interface Handle, VNIH (405), funktionsfähig koppeln; und
wobei das System ferner umfasst
ein Message Payload Encapsulation Module, MPEM, (307), welches ausgestaltet ist,
eine oder mehrere Nachrichten, welche von dem NCS (305) oder dem VNI (108) empfangen wurden, zu lesen;
jeder der einen oder mehreren Nachrichten durch entweder Trennen oder Erzeugen einer Kennzeicheninformation von bzw. für die Nutzlast der einen oder mehreren Nachrichten ein Kennzeichen zuzuordnen; und
die resultierende Nutzlast und Kennzeicheninformation der MMU (308) für eine Kennzeichenüberprüfung und ein Schreiben der Nutzlast auf das bezeichnete Ziel über den NCSH (401) oder den VNIH (405) zurückzugeben.

9. System nach Anspruch 8, wobei die MMU (308) ferner ausgestaltet ist,
gleichzeitig ein oder mehrere virtuelle geschichtete Netzwerke über ein oder mehrere physikalische Netzwerke zu transportieren; und
eine Kommunikation zwischen dem Betriebssystem (303) und den virtuellen geschichteten Netzwerken über die eingerichteten Kanäle, Handles und den Netzwerk-Software-Stack und Ressourcen des Betriebssystems (303) einzurichten.

10. System nach Anspruch 8, wobei mindestens eines der virtuellen geschichteten Netzwerke ein Virtual Local Area Network, VLAN, darstellt.

11. System nach Anspruch 10, wobei mindestens eines von den VLANs ferner eine Layered Encription Zone, LENZ, umfasst.

12. System nach Anspruch 8, wobei die MMU (308) ferner ausgestaltet ist, Nachrichten zwischen einem oder mehreren virtuellen geschichteten Netzwerken, welche zu einer ersten Gruppe gehören, und einem oder mehreren virtuellen geschichteten Netzwerken, welche zu einer zweiten Gruppe gehören, zu übertragen.

13. System nach Anspruch 8, wobei das physikalische Netzwerk mindestens ein Wide Area Network, WAN, umfasst.

14. System nach Anspruch 8, wobei das physikalische Netzwerk mindestens ein Local Area Network, LAN, umfasst.

15. Computerprogrammprodukt, umfassend Befehle, welche, wenn das Programm von einem Computer ausgeführt wird, den Computer veranlassen, alle Schritte des Verfahrens nach Anspruch 1 auszuführen.

## Revendications

1. Procédé, mis en oeuvre par logiciel, exploitable par une unité de gestion de messages, MMU, (308), dans un système de réseau, le procédé comprenant les étapes ci-dessous consistant à :
établir une poignée de communication avec une unique interface de réseau virtuel, VNI, (208) résidant en tant qu'une ressource de noyau dans un système d'exploitation (303) ;
établir un unique connecteur de communication réseau, NCS, (305), fonctionnellement couplé à une pluralité de réseaux en couches virtuels par l'intermédiaire d'une interface de réseau physique, PNI, (101), et une pile logicielle réseau du système d'exploitation (303) ;
établir des canaux de données qui couplent fonctionnellement l'unité MMU (308) au connecteur NCS (305) et à l'interface VNI (208), par l'intermédiaire de poignées de canaux de données respectives, à savoir une poignée de connecteur de communication réseau, NCSH, (401), et une poignée d'interface de réseau virtuel, VNIH (405) ; et
traiter des messages par le biais d'un module d'encapsulation de charge utile de messages, MPEM, (307), dans lequel le module MPEM (307) est configuré de manière à :
lire un ou plusieurs messages reçus en provenance du connecteur NCS (305) ou de l'interface VNI (208) ;
associer une étiquette à chacun dudit un ou desdits plusieurs messages, soit par la séparation, soit par la création d'informations d'étiquette, au niveau de la charge utile dudit un ou desdits plusieurs messages ; et
renvoyer la charge utile et les informations d'étiquette résultantes à l'unité MMU (308) à des fins d'inspection d'étiquette, et écrire la charge utile au niveau de la destination désignée par l'intermédiaire de la poignée NSCH (401) ou de la poignée VNIH (405).

2. Procédé selon la revendication 1, dans lequel :
un ou plusieurs réseaux en couches virtuels peuvent être transportés simultanément sur un ou plusieurs réseaux physiques ; et
une communication est établie entre le système d'exploitation (303) et les réseaux en couches virtuels par l'intermédiaire des canaux établis, des poignées, de la pile logicielle réseau, et des ressources du système d'exploitation (303).

3. Procédé selon la revendication 1, dans lequel au moins l'un des réseaux en couches virtuels représente un réseau local virtuel, VLAN.

4. Procédé selon la revendication 3, dans lequel au moins l'un des réseaux VLAN comprend en outre une zone de chiffrement en couches, LENZ.

5. Procédé selon la revendication 1, dans lequel l'unité MMU (308) est en outre configurée de manière à transmettre des messages entre un ou plusieurs réseaux en couches virtuels appartenant à un premier groupe et un ou plusieurs réseaux en couches virtuels appartenant à un second groupe.

6. Procédé selon la revendication 1, dans lequel le réseau physique comprend au moins un réseau étendu, WAN.

7. Procédé selon la revendication 1, dans lequel le réseau physique comprend au moins un réseau local, LAN.

8. Système de multiples réseaux virtuels simultanés (301), mis en oeuvre sous la forme d'un unique processus logiciel, le système comprenant :
une unité de gestion de messages, MMU, (308), qui est configurée de manière à :
établir une poignée de communication avec une unique interface de réseau virtuel, VNI, (208) résidant en tant qu'une ressource de noyau dans un système d'exploitation (303) ;
établir un unique connecteur de communication réseau, NCS, (305), fonctionnellement couplé à une pluralité de réseaux en couches virtuels par l'intermédiaire d'une interface de réseau physique, PNI, (101), et une pile logicielle réseau du système d'exploitation (303) ;
établir au moins deux canaux de données qui couplent fonctionnellement l'unité MMU (308) au connecteur NCS (305) et à l'interface VNI (208), par l'intermédiaire de poignées de canaux de données respectives, à savoir une poignée de connecteur de communication réseau, NCSH, (401), et une poignée d'interface de réseau virtuel, VNIH (405) ; et
dans lequel le système comprend en outre :
un module d'encapsulation de charge utile de messages, MPEM, (307), lequel est configuré de manière à :
lire un ou plusieurs messages reçus en provenance du connecteur NCS (305) ou de l'interface VNI (208) ;
associer une étiquette à chacun dudit un ou desdits plusieurs messages, soit par la séparation, soit par la création d'informations d'étiquette, au niveau de la charge utile dudit un ou desdits plusieurs messages ; et
renvoyer la charge utile et les informations d'étiquette résultantes à l'unité MMU (308) à des fins d'inspection d'étiquette, et écrire la charge utile au niveau de la destination désignée par l'intermédiaire de la poignée NSCH (401) ou de la poignée VNIH (405).

9. Système selon la revendication 8, dans lequel l'unité MMU (308) est en outre configurée de manière à :
transporter simultanément un ou plusieurs réseaux en couches virtuels sur un ou plusieurs réseaux physiques ; et
établir une communication entre le système d'exploitation (303) et les réseaux en couches virtuels par l'intermédiaire des canaux établis, des poignées, de la pile logicielle réseau, et de ressources du système d'exploitation (303).

10. Système selon la revendication 8, dans lequel au moins l'un des réseaux en couches virtuels représente un réseau local virtuel, VLAN.

11. Système selon la revendication 10, dans lequel au moins l'un des réseaux VLAN comprend en outre une zone de chiffrement en couches, LENZ.

12. Système selon la revendication 8, dans lequel l'unité MMU (308) est en outre configurée de manière à transmettre des messages entre un ou plusieurs réseaux en couches virtuels appartenant à un premier groupe et un ou plusieurs réseaux en couches virtuels appartenant à un second groupe.

13. Système selon la revendication 8, dans lequel le réseau physique comprend au moins un réseau étendu, WAN.

14. Système selon la revendication 8, dans lequel le réseau physique comprend au moins un réseau local, LAN.

15. Produit-programme informatique comprenant des instructions qui, lorsque le programme est exécuté par un ordinateur, amènent l'ordinateur à mettre en oeuvre toutes les étapes du procédé selon la revendication 1.
